# EUROPÄISCHE PATENTSCHRIFT

(11) **EP 3 249 729 B1**
(45) Veröffentlichungstag und Bekanntmachung des Hinweises auf die Patenterteilung: **26.06.2019**
(21) Anmeldenummer: 17172641.7
(22) Anmeldetag: 24.05.2017
(51) Int. Cl.: H01M 8/16, C02F 3/00, C02F 3/10, C02F 1/66, C02F 1/461, C02F 3/20, C02F 3/30

(54) **VERFAHREN UND VORRICHTUNGEN ZUR BIOELEKTRISCHEN STROMGEWINNUNG AUS ORGANISCHEN INHALTSSTOFFEN EINES ABWASSERS**
METHOD AND DEVICES FOR BIOELECTRICAL ELECTRICITY GENERATION FROM ORGANIC INGREDIENTS OF WASTEWATER
PROCÉDÉ ET DISPOSITIFS DE PRODUCTION DE COURANT BIOÉLECTRIQUES À PARTIR DE CONSTITUANTS ORGANIQUES D'EAUX USÉES

(30) Priorität: 25.05.2016 DE 102016109606
(43) Veröffentlichungstag der Anmeldung: 29.11.2017
(73) Patentinhaber: Eisenhuth GmbH & Co. KG, 37520 Osterode (DE); Technische Universität Clausthal, 38678 Clausthal-Zellerfeld (DE)
(72) Erfinder: Sievers, Michael, 38678 Clausthal-Zellerfeld (DE); Kunz, Ulrich, 37520 Osterode (DE); Hickmann, Thorsten, 37520 Osterode (DE)
(74) Vertreter: REHBERG HÜPPE + PARTNER

(56) Entgegenhaltungen:
- US-A1- 2015 349 350
- CARREON-BAUTISTA SALVADOR ET AL: "An Inductorless DC-DC Converter for an Energy Aware Power Management Unit Aimed at Microbial Fuel Cell Arrays", IEEE JOURNAL OF EMERGING AND SELECTED TOPICS IN POWER ELECTRONICS, IEEE, PISCATAWAY, NJ, USA, Bd. 3, Nr. 4, 1. Dezember 2015 (2015-12-01), Seiten 1109-1121, XP011588717, ISSN: 2168-6777, DOI: 10.1109/JESTPE.2015.2398851 [gefunden am 2015-10-29]
- JAE-DO PARK ET AL: "Hysteresis-Controller-Based Energy Harvesting Scheme for Microbial Fuel Cells With Parallel Operation Capability", IEEE TRANSACTIONS ON ENERGY CONVERSION, IEEE SERVICE CENTER, PISCATAWAY, NJ, US, Bd. 27, Nr. 3, 1. September 2012 (2012-09-01), Seiten 715-724, XP011454666, ISSN: 0885-8969, DOI: 10.1109/TEC.2012.2196044
- LIU WEI-FENG ET AL: "Microbial fuel cells for energy production from wastewaters: the way toward practical application", JOURNAL OF ZHEJIANG UNIVERSITY SCIENCE A, ZHEIJIANG UNIVERSITY PRESS, CN, Bd. 15, Nr. 11, 9. November 2014 (2014-11-09), Seiten 841-861, XP036187352, ISSN: 1673-565X, DOI: 10.1631/JZUS.A1400277 [gefunden am 2014-11-09]

## Beschreibung

### TECHNISCHES GEBIET DER ERFINDUNG

Die Erfindung bezieht sich auf ein Verfahren zur bioelektrischen Stromgewinnung auf organischen Inhaltsstoffen eines Abwassers, das zumindest intermittierend in einer Flussrichtung fließt. Spezieller bezieht sich die Erfindung auf ein Verfahren, bei dem eine Anode in einem ersten räumlichen Bereich in das Abwasser eingetaucht wird. Noch spezieller bezieht sich die Erfindung auf ein Verfahren, bei dem eine mit der Anode elektrisch verbundene Kathode in einem zweiten räumlichen Bereich in das Abwasser eingetaucht wird und bei dem das Abwasser, bis es in den zweiten räumlichen Bereich gelangt, zumindest intermittierend belüftet wird. Weiterhin bezieht sich die Erfindung auf eine Vorrichtung zur bioelektrischen Stromgewinnung aus organischen Inhaltsstoffen eines Abwassers nach einem solchen Verfahren mit einer Anodenkammer, die einen Zulauf und einen Ablauf für das Abwasser aufweist und in der eine Anode angeordnet ist, und mit einer mit der Anode elektrisch verbundenen Kathode.

### STAND DER TECHNIK

Ein Verfahren und eine Vorrichtung zur bioelektrischen Denitrifikation von Flüssigkeiten, mit denen Strom gewonnen werden kann, sind aus der WO 2011/006939 A2 bekannt. Bei dem bekannten Verfahren wird eine Vorklärung in einer Anodenzellen durchgeführt, in der eine Anode zur bioelektrochemischen Umwandlung von Kohlenstoffverbindungen angeordnet ist. In einem aeroben Reaktor finden eine Kohlenstoffentfernung und eine Nitrifikation statt. Die Denitrifikation und/oder eine Nachklärung erfolgt ein einer Kathodenzelle mit einer Kathode zur bioelektrochemischen Denitrifikation. In dem aeroben Reaktor kommt ein Verfahren zur Fluidreinigung mit sessilen Biofilmen zur Anwendung. Die Anodenzelle und die Kathodenzelle sind räumlich voneinander getrennt und nicht durch eine Membran miteinander verbunden; und sie werden kontinuierlich oder in einem Batch-Verfahren von dem Fluid durchströmt. Der Elektronentransport zwischen der Anode und der Kathode erfolgt über einen Leiter, und der Protonentransport erfolgt über den Fluss des Fluids. Der Protonentransport oder lonentransport kann zudem über eine Salzbrücke zwischen der Anodenzelle und der Kathodenzelle erfolgen.

Die praktischen Voraussetzungen, um mit dem Verfahren und der Vorrichtung, die aus der WO 2011/006939 A2 bekannt sind, Strom zu gewinnen, sind ungünstig. Durch den räumlichen Abstand der Anode zu der Kathode und den entsprechend langen dazwischen verlaufenden Leiter und durch den Protonen- oder lonentransport über den Fluss des Mediums oder über die Salzbrücke ist der elektrische Innenwiderstand insbesondere verglichen mit der kleinen zwischen der Anode und der Kathode abfallenden Spannung von typischerweise weniger als 300 mV sehr hoch.

Ein Verfahren und eine Vorrichtung zur bioelektrischen Wasserstoffgewinnung aus organischen Inhaltsstoffen ist aus der WO 2009/008709 A1 bekannt. Hier ist eine Anodenkammer, in der eine Anode angeordnet ist, von einer Kathodenkammer, in der eine Kathode angeordnet ist, durch eine ionenselektive, für Protonen durchlässige Membran getrennt. Auf der Anode wird ein Biofilm aufgewachsen. Dabei wird eine externe Spannung zwischen der Anode und der Kathode angelegt. Das der Anode zugeführte Fluid mit den organischen Inhaltsstoffen wird angesäuert. Die Bedingungen werden insgesamt so eingestellt, dass der Biofilm Wasserstoff erzeugt.

Verfahren und Vorrichtungen zur Stromgewinnung aus fließendem Abwasser mit organischen Inhaltsstoffen, die die Merkmale der Oberbegriffe der unabhängigen Patentansprüche 1 und 9 aufweisen, sind aus der US 2010 / 0 304 226 A1, der US 2014 / 0 030 555 A1 und der US 2012 / 0 132 521 A1 bekannt.

Aus der US 3 340 094 A ist es bekannt, die von einer biochemischen Zelle mit photosynthetischen Bakterien erzeugte Spannung mit einem einen Transformator aufweisenden Spannungswandler hochzusetzen.

Aus CARREON-BAUTISTA SALVADOR ET AL: "An Inductorless DC-DC Converterfor an Energy Aware Power Management Unit Aimed at Microbial Fuel Cell Arrays", IEEE JOURNAL OF EMERGING AND SELECTED TOPICS IN POWER ELECTRONICS, IEEE, PISCATAWAY, NJ, USA, Bd. 3, Nr. 4, 1. Dezember 2015 (2015-12-01), Seiten 1109-1121, ist ein DC/DC-Wandler zur Stromgewinnung mit einem mikrobiologischen Brennstoffzellenarray bekannt. Mit dem DC/DC-Wandler wird ein Maximum Power Point (MPP)-Tracking durchgeführt. Jede mikrobiologische Brennstoffzelle des Arrays weist eine Anode und eine von der Anode durch eine Polymerelektrolytmembran getrennte Kathode auf. Die einzelnen mikrobiologischen Brennstoffzellen sind jeweils über einen Schalter parallel zueinander an den Eingang des DC/DC-Wandlers angeschlossen.

Aus JAE-DO PARK ET AL: "Hysteresis-Controller-Based Energy Harvesting Scheme for Microbial Fuel Cells With Parallel Operation Capability", IEEE TRANSACTIONS ON ENERGY CONVERSION, IEEE SERVICE CENTER, PISCATAWAY, NJ, US, Bd. 27, Nr. 3,1. September 2012 (2012-09-01), Seiten 715-724, ist ein Energieernteschema für mikrobiologische Brennstoffzellen mit Parallelbetriebsfähigkeit bekannt. Dabei werden einzelne Brennstoffzellen jeweils über einen als Energieernter bezeichneten DC/DC-Wandler an einen Eingangszwischenkreis eines Hochsetzstellers angeschlossen.

Aus LIU WEI-FENG ET AL: "Microbial fuel cells for energy production from wastewaters: the way toward practical application", JOURNAL OF ZHEJIANG UNIVERSITY SCIENCE A, ZHEIJIANG UNIVERSITY PRESS, CN, Bd. 15, Nr. 11, 9. November 2014 (2014-11-09), Seiten 841-861, sind mikrobiologische Brennstoffzellen zur Energieproduktion aus Abwasser bekannt, bei denen eine Anode auf einer Seite einer Membran in das Abwasser eintaucht, während eine Kathode auf der anderen Seite der Membran in einen Katholyten eintaucht. Hinsichtlich der Größe der mikrobiologischen Brennstoffzellen ist darauf verwiesen, dass diese gegenüber dem Labormaßstab auf ein praktisches Niveau aufskaliert werden müssen. An konkreten Zahlen werden eine gestapelte mikrobiologische Brennstoffzelle mit einer Kapazität von 20 Liter in zwei Kammern und eine Fläche einer Anode von 1 m² genannt.

### AUFGABE DER ERFINDUNG

Der Erfindung liegt die Aufgabe zugrunde, ein Verfahren und eine Vorrichtung zu bioelektrischen Stromgewinnung aus organischen Inhaltsstoffen eines zumindest intermittierend in einer Flussrichtung fließenden Abwassers aufzuzeigen, die eine effektive Stromgewinnung insbesondere bei der Aufbereitung industrieller oder kommunaler Abwässer in vorhandenen Kläranlagen ermöglichen.

### LÖSUNG

Die Aufgabe der Erfindung wird durch ein Verfahren mit den Merkmalen des Patentanspruchs 1 und eine Vorrichtung mit den Merkmalen des Patentanspruch 8 gelöst. Bevorzugte Ausführungsformen des erfindungsgemäßen Verfahrens und der erfindungsgemäßen Vorrichtung sind in den abhängigen Patentansprüchen definiert.

### BESCHREIBUNG DER ERFINDUNG

Bei dem erfindungsgemäßen Verfahren zur bioelektrischen Stromgewinnung aus organischen Inhaltsstoffen eines Abwassers, das zumindest intermittierend in einer Flussrichtung fließt, wobei eine Anode in einem ersten räumlichen Bereich in das Abwasser eingetaucht wird, wobei einer mit der Anode elektrisch verbundenen Kathode, die in einem zweiten räumlichen Bereich angeordnet ist, Sauerstoff zugeführt, insbesondere indem sie in das Abwasser eingetaucht wird, wobei das Abwasser, bis es in den zweiten räumlichen Bereich gelangt, zumindest intermittierend belüftet wird, wird der zweite räumliche Bereich von dem ersten räumlichen Bereich durch eine protonendurchlässige Membran abgegrenzt und wird eine zwischen der Kathode und der Anode anliegende Spannung mit einem bei der Anode und der Kathode angeordneten DC/DC-Wandler auf eine höhere Spannung hochgesetzt. Mit dem DC/DC-Wandler und mit mindestens einem, parallel zu dem DC/DC-Wandler an einen Zwischenkreis angeschlossenen weiteren DC/DC-Wandler wird der Zwischenkreis geladen, wobei die DC/DC-Wandler jeweils an eine Anode in dem oder einem weiteren ersten räumlichen Bereich und an eine Kathode in dem oder einem weiteren zweiten räumlichen Bereich angeschlossen sind.

Die Angabe, dass das Abwasser, bis es in den zweiten räumlichen Bereich gelangt, zumindest intermittierend belüftet wird, schließt die Möglichkeit ein, dass das Abwasser erst in dem zweiten räumlichen Bereich kontinuierlich oder intermittierend belüftet wird. Der Kathode in dem zweiten räumlichen Bereich kann aber auch auf anderer Weise Sauerstoff zugeführt werden, insbesondere, indem die Kathode in dem zweiten räumlichen Bereich in eine andere sauerstoffhaltige Flüssigkeit oder ein sauerstoffhaltiges Gas eingetaucht wird.

Die protonendurchlässige Membran kann eine ionenselektive Membran sein, wie sie aus der Brennstoffzellentechnik bekannt ist. Die protonendurchlässige Membran muss aber nicht ionenselektiv sein; d. h. sie kann zusätzlich auch für andere Objekte als Protonen durchlässig sein. Sie kann beispielsweise aus einem als Separator wirkenden porösen Material bestehen. Solche Materialien sind aus der Batterietechnik bekannt und häufig preisgünstiger als ionenselektive Materialien.

Bei dem erfindungsgemäßen Verfahren schließen die DC/DC-Wandler mehrere Anoden in demselben ersten Bereich mit mehreren Kathoden in demselben zweiten räumlichen Bereich oder mehrere Anoden und Kathoden in getrennten ersten und zweiten räumlichen Bereichen an den Zwischenkreis an. Elektrische Unterschiede zwischen den einzelnen Anoden/Kathoden-Paaren können dabei mit den einzelnen DC/DC-Wandlern ausgeglichen werden. Der Zwischenkreis kann somit auf eine konstante höhere Spannung aufgeladen werden. Mit dieser höheren Spannung kann beispielsweise eine Last direkt oder über einen weiteren DC/DC- oder DC/AC-Wandler versorgt werden. Dabei kann ein Energiezwischenspeicher wie beispielsweise ein Kondensator oder ein Akkumulator an den Zwischenkreis angeschlossen werden.

Die Kathode ist insoweit elektrisch mit der Anode verbunden, dass ein einem Protonenstrom durch die protonendurchlässige Membran entsprechender Elektronenstrom von der Anode zu der Kathode fließen kann.

Mit dem erfindungsgemäßen Verfahren wird dafür gesorgt, dass der Innenwiderstand für den zwischen der Kathode und der Anode fließenden Strom klein gehalten wird. Hierzu werden der erste räumliche Bereich, in dem die Anode angeordnet ist, und der zweite räumliche Bereich, in dem die Kathode angeordnet ist, nur durch die protonendurchlässige Membran getrennt, so dass die Protonen auf möglichst kurzem Wege mit geringem Widerstand von der Anode zu der Kathode gelangen können. Die zwischen der Anode und der Kathode fließenden Elektronen fließen bei der geringen zwischen der Kathode und der Anode anliegenden Spannung nur bis zu dem jeweiligen DC/DC-Wandler, der nahe der Anode und der Kathode angeordnet ist und der diese geringe Spannung hochsetzt. Aufgrund der hochgesetzten Spannung sind die ohmschen Verluste bei der Weiterleitung der elektrischen Energie reduziert. Zudem können mit den DC/DC-Wandlern Schwankungen der Spannung zwischen der Kathode und der Anode ausgeglichen werden, so dass trotz dieser Schwankungen eine konstante höhere Spannung bereitgestellt werden kann. Effektiv wird der Innenwiderstand zwischen der Anode und der Kathode bei dem erfindungsgemäßen Verfahren so weit reduziert, das auch geringe Spannungen zwischen der Kathode und der Anode von etwa 10 bis 250 mV genutzt werden, wie sie bei bioelektrischer Spannungserzeugung praktisch auftreten.

Der erste und der zweite räumliche Bereich können zumindest soweit parallel zueinander angeordnet sein, dass nicht das gesamte Abwasser sowohl durch den ersten als auch durch den zweiten räumlichen Bereich hindurchtritt. Auch dann kann der zweite räumliche Bereich - für den durch den ersten räumlichen Bereich fließenden Teil des Abwassers - flussab des ersten räumlichen Bereichs angeordnet sein, wobei das Abwasser nach dem ersten räumlichen Bereich belüftet wird.

Konkret ist der erste räumliche Bereich, in dem die Anoden angeordnet sind, eine Anodenkammer, die in einem Belebungsbecken angeordnet wird, dessen verbleibendes Volumen den zweiten räumlichen Bereich definiert, und die zumindest intermittierend so mit dem Abwasser beschickt wird, dass Abwasser aus der Anodenkammer über einen Überlauf in das Belebungsbecken übertritt. Das Abwasser wird dem Belebungsbecken dann durch die Anodenkammer hindurch zugeführt, die bereits innerhalb des Belebungsbeckens angeordnet aber dessen Volumen gegenüber abgegrenzt ist. So wird das Abwasser in der Anodenkammer noch nicht belüftet, d. h. mit Sauerstoff behandelt. Dies erfolgt erst nach seinem Übertritt in das Volumen des Belebungsbeckens außerhalb der Anodenkammer. Das Belebungsbecken kann, aber muss nicht kontinuierlich belüftet werden. Die Belüftung kann so abgestimmt werden, dass mit dem erfindungsgemäßen Verfahren neben der Stromgewinnung auch eine Denitrifikation in dem Belebungsbecken erreicht wird. Die Anordnung der Anodenkammer in einem vorhandenen Belebungsbecken erlaubt eine Umsetzung des erfindungsgemäßen Verfahrens mit besonders geringem konstruktiven Aufwand in vorhandenen industriellen und kommunalen Kläranlagen.

Die Anodenkammer wird während der Stromgewinnung vorzugsweise so mit Abwasser beschickt, dass sich eine gleichmäßige Strömungsgeschwindigkeit des Abwassers längs der Anode von nicht mehr als 0,4 m/s oder im Bereich von 0,02 bis 0,08 m/s einstellt. Diese Strömungsgeschwindigkeit ermöglicht eine Besiedelung der Anode mit für die bioelektrische Stromgewinnung geeigneten Mikroorganismen und anschließend eine Aufnahme der von den Mikroorganismen umzusetzenden Inhaltsstoffe aus dem Abwasser.

Wenn die Anodenkammer intermittierend so mit Abwasser beschickt wird, dass sich eine Strömung, insbesondere eine pulsierende Strömung mit einer maximalen Strömungsgeschwindigkeit des Abwassers längs der Anode von mehr als 1 m/s oder im Bereich von 2 bis 5 m/s einstellt, kann damit die Anode und auch die Membran von etwaigen übermäßigen Anwachsungen von Mikroorganismen freigespült werden. Das freigespülte biologische Material gelangt über den Überlauf aus der Anodenkammer in das Belebungsbecken.

An der Anode freigesetzte Gase, insbesondere Methan, können aus einem oben geschlossenen Kopfraum der Anodenkammer abgeleitet und verwertet werden.

Bei dem erfindungsgemäßen Verfahren wird die Kathode vorzugsweise auf der Membran angeordnet und mit der Membran zu einer Kathoden-Membran-Einheit zusammengefasst. Hierdurch ergeben sich sowohl konstruktive als auch elektrische Vorteile in Bezug auf die Begrenzung des Innenwiderstands zwischen der Kathode und der Anode.

Die Anode kann mittig zwischen zwei parallel zueinander angeordneten Teilabschnitten der Kathoden-Membran-Einheit angeordnet werden. Bei dieser Anordnung ist die plattenförmig oder flächig ausgebildete Anode mit ihren beiden, den beiden Teilabschnitten der Kathoden-Membran-Einheit zugewandten Oberflächen bioelektrisch wirksam, während die Kathoden im Wesentlichen nur jeweils mit ihrer an die Membran angrenzenden Oberfläche elektrisch und mit ihrer der Membran abgekehrten Oberfläche durch Bakterienbesiedlung biologisch wirksam sind.

Bei dem erfindungsgemäßen Verfahren kann das Abwasser flussauf des ersten räumlichen Bereichs, in dem die Anode angeordnet ist, durch Versäuern und/oder Ansäuern vorbehandelt werden, um den Anteil an biologisch leicht abbaubaren Abwasserinhaltsstoffen zu erhöhen. Das Versäuern kann zum Beispiel analog zu zweistufigen Biogasgewinnungsverfahren durch eine anaerobe Vorversäuerung erfolgen.

Mit den DC/DC-Wandlern kann die Spannung zwischen der jeweiligen Kathode und der jeweiligen Anode durch Einstellen des bei der Spannung fließenden Stroms eingestellt werden. Dies kann mit dem Ziel erfolgen, dass eine verfügbare elektrische Leistung maximiert wird. Anders gesagt kann mit den DC/DC-Wandlern z. B. ein Maximum Power Point (MPP)-Tracking durchgeführt werden. Dabei ist aber darauf abzuzielen, die verfügbare elektrische Leistung nachhaltig, d. h. über einen längeren Zeitraum zu maximieren. So kann eine kurzfristige Leistungssteigerung bei einer Spannung möglich sein, die die Mikroorganismen an der Anode und/oder Kathode schädigt. Deshalb ist auch das Einstellen beliebigen anderer Betriebspunkte der DC/DC-Wandler auf den Kennlinien der bei dem erfindungsgemäßen Verfahren betriebenen mikrobiellen Brennstoffzellen möglich, um so die günstigste Version für die jeweilige Mikroorganismenpopulation experimentell zu ermitteln.

Mit den DC/DC-Wandlern kann vorübergehend auch eine externe Spannung zwischen der jeweiligen Kathode und der jeweiligen Anode angelegt werden. Dies kann sinnvoll sein, um die Besiedlung der Anode und/oder der Kathode mit bestimmten Mikroorganismen zu fördern. Anders gesagt kann die angelegte Spannung dazu genutzt werden, die aufwachsenden Mikroorganismen zu selektieren, die für den gewünschten Zweck nützlich sind, d. h. die Stromgewinnung ggf. kombiniert mit einer Denitrifikation.

Die DC/DC-Wandler können auch dazu genutzt werden, einen zwischen der Kathode und der Anode fließenden Strom auf einen vorgegebenen Wert zu regeln, um beispielsweise bestimmte elektrische Bedingungen für die Mikroorganismen an der Anode und/oder der Kathode zu schaffen.

Bei der erfindungsgemäßen Vorrichtung zur bioelektrischen Stromgewinnung aus organischen Inhaltsstoffen eines Abwassers nach dem erfindungsgemäßen Verfahren mit einer Anodenkammer, die einen Zulauf und einen Ablauf für das Abwasser aufweist und in der eine Anode angeordnet ist, und mit einer mit der Anode elektrisch verbundenen Kathode verläuft durch die Anodenkammer ein sich von dem Zulauf zu dem Ablauf längs der plattenförmigen Anode horizontal erstreckender Kanal, in den die plattenförmige Anode vertikal eintaucht. Der Kanal ist seitlich zumindest abschnittsweise durch eine protonendurchlässige Membran begrenzt, und die Kathode ist außerhalb der Anodenkammer auf der Membran angeordnet. Ein an oder in der Anodenkammer angeordneter hochsetzender DC/DC-Wandler ist eingangsseitig an die Kathode und die Anode angeschlossen. Um kurze Strompfade von jedem Punkt der Anode und/oder der Kathode sicherzustellen, sind verschiedene Teile der Anode und/oder der Kathode an mehrere DC/DC-Wandler angeschlossen, die ihrerseits an einen gemeinsamen Zwischenkreis angeschlossen sind. Die mehreren DC/DC-Wandler können dabei auch als verschiedene Teil-DC/DC-Wandler eines DC/DC-Wandlers der erfindungsgemäßen Vorrichtung angesehen werden, wobei das Wort "verschiedene" hier aber nicht ausschließt, dass alle Teil-DC/DC-Wandler baugleich sind. Erst bei der von den DC/DC-Wandlern hochgesetzten Spannung fließt der Strom über weitere Strecken.

Die Anodenkammer kann beispielsweise in einem vorhandenen Belebungsbecken einer Kläranlage angeordnet werden. Dazu ist der Ablauf am Ende des Kanals als Überlauf für das Abwasser aus der Anodenkammer in das angrenzende Volumen des Belebungsbecken ausgebildet.

Die Anodenkammer kann zwei in einem freien Abstand parallel zueinander verlaufende Teilkammern umfassen, durch die das Abwasser in entgegensetzten Strömungsrichtungen fließt, so dass der Zulauf und der Ablauf der Anodenkammer beieinander liegen. So wird durch das Einbringen der Anodenkammer in ein Belebungsbecken zwar das Volumen des Belebungsbeckens um das Volumen der Anodenkammer reduziert. Ein über die Anodenkammer in das Belebungsbecken zulaufendes Abwasser tritt aber weiterhin etwa an derselben Stelle in das belüftete Volumen des Belebungsbeckens ein.

Die Anodenkammer kann einen nach oben und seitlich begrenzten Kopfraum mit einem Gasableitanschluss aufweisen, um in der Anodenkammer frei werdende Gase abzuleiten. Die Anodenkammer kann bis auf den Ablauf und den Zulauf vollständig geschlossen sein.

Die Anode in der Anodenkammer ist vorzugsweise mittig zwischen zwei parallelen Teilabschnitten der Membran angeordnet. Dabei ist ein Abstand der Membran zu der Anode vorzugsweise kleiner als 10 cm, mehr bevorzugt liegt er in einem Bereich von 0,5 bis 2 cm.

Eine Länge der Anode zwischen dem Zulauf und dem Ablauf beträgt mindestens 0,5 m oder bevorzugt zwischen 3 m und 10 m. Bei den oben genannten Strömungsgeschwindigkeiten strömt das Abwasser so lange genug längs der Anode, um seine für die Stromgewinnung geeigneten Inhaltsstoffe zu nutzen.

Eine Fläche der Kathode und eine Fläche der Membran sind vorzugsweise mindestens um einen Faktor 2 oder mehr bevorzugt um einen Faktor im Bereich von 3 bis 5 größer als eine Fläche der Anode. Dabei bezieht sich diese Fläche nicht unbedingt auf alle Oberflächen der Kathode, Membran und Anode, sondern auf die flächigen Erstreckungen in ihren Haupterstreckungsebenen.

Vorzugsweise ist die Kathode bei der erfindungsgemäßen Vorrichtung auf der Membran angeordnet und mit der Membran zu einer Kathoden-Membran-Einheit zusammengefasst. Durch die Kathode weist diese Kathoden-Membran-Einheit einen formstabilen Aufbau auf.

Die Anode und/oder die Membran und die Kathode können auswechselbar an einer formstabilen Kammergrundstruktur gelagert sein. Dabei erweist sich das Zusammenfassen der Kathode mit der Membran zu der Kathoden-Membran-Einheit beim Auswechseln wie beim anfänglichen Zusammenbau als vorteilhaft.

Konkret kann die Anode und/oder die Kathode ein in elektrisch leitfähigen Kunststoff eingebettetes Gitter, Lochblech oder Gewebe aus einem metallischen Leiter aufweisen, an den der jeweilige DC/DC-Wandler angeschlossen ist. Der leitfähige Kunststoff kann eine angeraute Oberfläche für eine einfache Besiedelung mit Mikroorganismen aufweisen. Den etwas höheren ohmschen Widerstand des elektrisch leitfähigen Kunststoffs müssen fließende Elektronen nur bis zu dem metallischen Leiter überwinden, der sie auf kurzem Wege zu dem DC/DC-Wandler führt.

Die Anschlussleitungen des DC/DC-Wandlers an die Anode und/oder die Kathode sind nicht länger als 3 m, vorzugsweise nicht länger als 0,5 m. Noch mehr bevorzugt ist kein Strompfad von einem Punkt der Anode und/oder der Kathode zu dem jeweiligen DC/DC-Wandler länger als 3 m oder um mehr als 1 m oder 0,5 m länger als eine vertikale Erstreckung der jeweiligen Anode oder Kathode. Hiermit wird der ohmsche Innenwiderstand zwischen der Anode und der Kathode klein gehalten.

Der DC/DC-Wandler kann bidirektional ausgebildet sein, um auch eine externe Spannung zwischen der Anode und der Kathode anlegen zu können. Er kann einen MPP-Tracker aufweisen, um die verfügbare elektrische Leistung maximieren zu können. Weiterhin kann er einen Stromregler aufweisen, um den zwischen der Anode und der Kathode fließenden Strom auf einen vorgegebenen Wert regeln zu können.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine Kläranlage mit einer erfindungsgemäßen Vorrichtung zur Umsetzung des erfindungsgemäßen Verfahrens.
- **Fig. 2**: zeigt einen Längsschnitt durch eine Anodenkammer der erfindungsgemäßen Vorrichtung.
- **Fig. 3**: ist ein vertikaler Querschnitt durch die Anodenkammer gemäß Fig. 2, längs der in Fig. 2 eingezeichneten Schnittlinie III-III.
- **Fig. 4**: ist eine Detailschnittansicht einer Anode in der Anodenkammer gemäß den Fig. 2 und 3; und
- **Fig. 5**: ist eine Detailschnittansicht einer die Anodenkammer gemäß den Fig. 2 und 3 abschnittweise begrenzenden Kathoden-Membran-Einheit.

### FIGURENBESCHREIBUNG

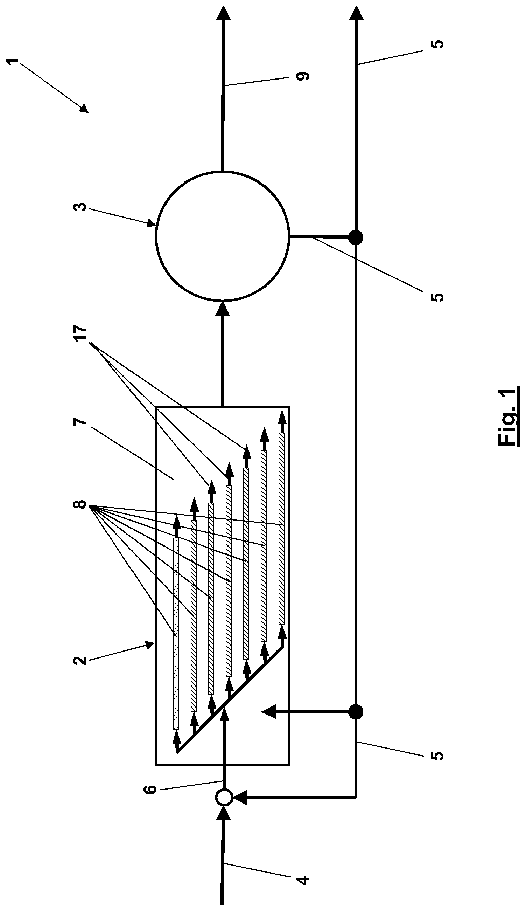

Eine in **Fig. 1** dargestellte Kläranlage 1 umfasst ein Belebungsbecken 2 und ein Klärbecken 3. Optional zusammen mit rückgeführtem Schlamm 5 wird Abwasser 4 einem Zulauf 6 zu dem Belebungsbecken 2 zugeführt. Dabei öffnet sich der Zulauf 6 nicht direkt in das freie Volumen 7 des Belebungsbeckens 2, sondern führt zunächst in Anodenkammern 8. Erst nach dem Wiederaustreten aus der jeweiligen Anodenkammer 8 gelangt das Abwasser 4 in das freie Volumen 7. In dem Belebungsbecken 2 wird das Abwasser zumindest intermittierend belüftet. Nach der Behandlung in dem Belebungsbecken 2 wird das Abwasser in das Klärbecken 3 überführt. Hier erfolgt eine Trennung in geklärtes Abwasser 9 und den Schlamm 5, der anteilig durch die Anodenkammer 8 und/oder direkt in das Belebungsbecken 2 zurückgeführt wird.

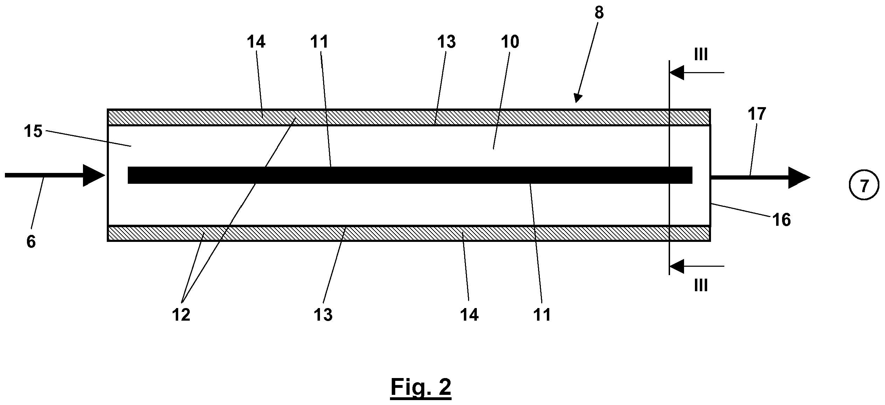

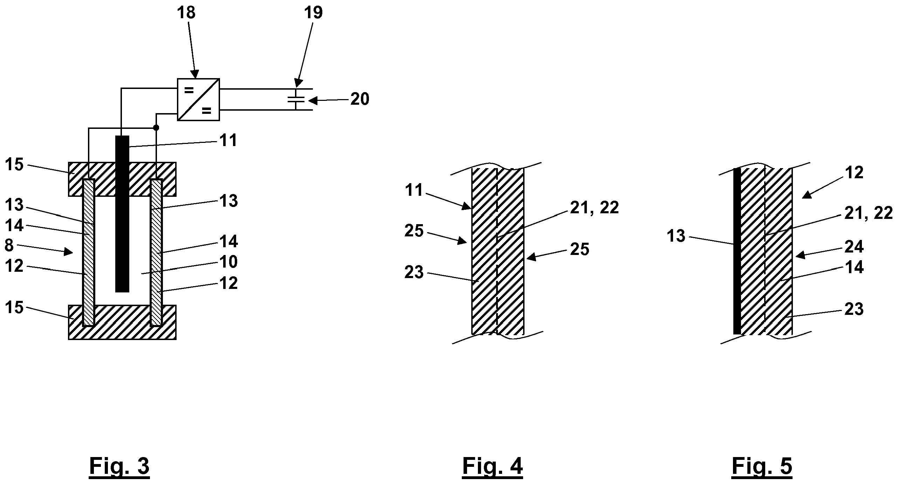

Mit Hilfe der Anodenkammern 8 wird Strom gewonnen. Dazu ist jede Anodenkammer 8 so aufgebaut, wie in den **Fig. 2** **und** **3** dargestellt. Durch jede Anodenkammer 8 verläuft ein Kanal 10, in den eine plattenförmige Anode 11 vertikal von oben eintaucht. Seitlich wird der Kanal 10 durch Kathoden-Membran-Einheiten 12 begrenzt, die jeweils eine innen liegende ionenselektive und insbesondere protonendurchlässige Membran 13 und eine darauf außen angeordnete Kathode 14 umfassen. Die Anode 11 und die Kathoden-Membran-Einheiten 12 sind auswechselbar an einer formstabilen Kammergrundstruktur 15 gelagert. Am dem Zulauf 6 abgekehrten Ende der Anodenkammer 8 ist ein Überlauf 16 als Ablauf 17 für das Abwasser in das freie Volumen 7 des Belebungsbeckens vorgesehen. In den Fig. 2 und 3 nicht dargestellt ist, dass die Anodenkammer 8 oberhalb der Kathoden-Membran-Einheit 12 einen Kopfraum mit einem Gasableitanschluss aufweisen kann.

Die Anode 11 und die Kathoden 14 sind an einem DC/DC-Wandler 18 angeschlossen, der in unmittelbarer Nähe der Anode 11 und der Kathoden 14, also beispielsweise direkt an oder in der Anodenkammer 8, vorgesehen ist, um die zwischen der Anode 11 und den Kathoden 14 anliegende Spannung mit kurzen Zuleitungen abzugreifen. Der DC/DC-Wandler 18 setzt diese Spannung hoch und lädt einen Zwischenkreis 19, in dem ein Kondensator als Energiezwischenspeicher vorgesehen ist. Mit dem DC/DC-Wandler 18 kann auch eine externe Spannung zwischen der Anode 11 und den Kathoden 14 angelegt werden, um eine Besiedelung der Anode 11 und/oder der Kathoden 14 selektiv mit solchen Mikroorganismen zu fördern, die für eine Stromgewinnung unter Umsetzung von Inhaltsstoffen aus dem in die Anodenkammer 8 eintretenden Abwasser besonders nützlich sind. Das Abwasser an der Anode 11 und an den Kathoden 14 unterscheidet sich grundsätzlich dadurch, dass nur das Abwasser an den Kathoden 14 der Belüftung in dem Belebungsbecken 2 unterworfen wurde. Der resultierende Unterschied in der Abwasserzusammensetzung wird bei der erfindungsgemäßen Stromgewinnung ausgenutzt.

**Fig. 4** illustriert den inneren Aufbau der Anode 11. Sie umfasst ein Gitter 21 aus einem metallischen elektrischen Leiter 22, das in einen elektrisch leitfähigen Kunststoff 23 eingebettet ist. Der in **Fig. 5** illustrierte innere Aufbau der Kathoden-Membran-Einheiten 12 umfasst zusätzlich die Membran 13 auf einer Seite der Kathode 14. Dabei kann zwischen der massiven Kathode 14 und der Membran 13 eine offenporige Zwischenschicht vorgesehen sein. Eine Besiedelung der Kathode 14 mit Mikroorganismen ist primär, in der Regel ausschließlich auf ihrer der Membran 13 abgekehrten Oberfläche 24 vorgesehen. Hingegen erfolgt eine Besiedelung der Anode 11 mit Mikroorganismen immer auf ihren beiden sich längs ihrer Haupterstreckungsebene erstreckenden Oberflächen 25.

Es gibt Hinweise, dass Biofilme, die sich auf der Anodenseite der Membran 13 ansiedeln, mit Sauerstoff versorgt werden, der durch die Membran 13 diffundiert. So können sich auf der Membran in der Anodenkammer 8 Nitrifikanten ansiedeln und dadurch Ammonium in Nitrat umwandeln. Zwar reduziert sich damit die Stromausbeute, doch gleichzeitig wird das Abwasser 4 besser gereinigt. Idealerweise werden die Prozesse in der Anodenkammer 8 mit zwei parallelen Reaktionen gesteuert, d. h. mit einer Reaktion zur Stromgewinnung an der Anode und einer Reaktion zur Nitrifikation an der Membran 13.

### BEZUGSZEICHENLISTE

- 1: Kläranlage
- 2: Belebungsbecken
- 3: Klärbecken
- 4: Abwasser
- 5: Schlamm
- 6: Zulauf
- 7: freies Volumen des Klärbeckens 2
- 8: Anodenkammer
- 9: geklärtes Abwasser
- 10: Kanal
- 11: Anode
- 12: Kathoden-Membran-Einheit
- 13: Membran
- 14: Kathode
- 15: Kammergrundstruktur
- 16: Überlauf
- 17: Ablauf
- 18: DC/DC-Wandler
- 19: Zwischenkreis
- 20: Kondensator
- 21: Gitter
- 22: metallischer Leiter
- 23: elektrisch leitfähiger Kunststoff
- 24: Oberfläche
- 25: Oberfläche

## Patentansprüche

1. Verfahren zur bioelektrischen Stromgewinnung aus organischen Inhaltsstoffen eines Abwassers (4), das zumindest intermittierend in einer Flussrichtung fließt,
- wobei eine Anode (11) in einem ersten räumlichen Bereich in das Abwasser (4) eingetaucht wird,
- wobei einer mit der Anode (11) elektrisch verbundenen Kathode (14), die in einem zweiten räumlichen Bereich angeordnet ist, Sauerstoff zugeführt wird,
- wobei der zweite räumliche Bereich von dem ersten räumlichen Bereich durch eine protonendurchlässige Membran (13) abgegrenzt wird,
- wobei eine zwischen der Kathode (14) und der Anode (11) anliegende Spannung mit einem bei der Anode (11) und der Kathode (14) angeordneten DC/DC-Wandler (18) auf eine höhere Spannung hochgesetzt wird,
- wobei ein Zwischenkreis (19) mit dem DC/DC-Wandler (18) und mit mindestens einem, parallel zu dem DC/DC-Wandler (18) an den Zwischenkreis angeschlossenen weiteren DC/DC-Wandler (18) geladen wird, wobei jeder der DC/DC-Wandler (18) an eine Anode (11) in dem oder einem weiteren ersten räumlichen Bereich und eine Kathode (14) in dem oder einem weiteren zweiten räumlichen Bereich angeschlossen ist, und
- wobei jeder Kathode (14) Sauerstoff zugeführt wird, indem die Kathode (14) in dem zweiten räumlichen Bereich in eine sauerstoffhaltige Flüssigkeit oder ein sauerstoffhaltiges Gas eingetaucht wird,
**dadurch gekennzeichnet, dass** der erste räumliche Bereich eine Anodenkammer (8) ist, die in einem Belebungsbecken (2) angeordnet wird, dessen verbleibendes Volumen den zweiten räumlichen Bereich definiert, und die zumindest intermittierend so mit dem Abwasser (4) beschickt wird, dass das Abwasser (4) aus der Anodenkammer (8) über einen Überlauf in das Belebungsbecken (2) übertritt.

2. Verfahren nach Anspruch 1, **dadurch gekennzeichnet, dass** das Abwasser (4) nach seinem Übertritt in das Belebungsbecken (2) belüftet wird.

3. Verfahren nach einem der vorhergehenden Ansprüche, **dadurch gekennzeichnet,**
- **dass** der erste räumliche Bereich zumindest intermittierend so mit dem Abwasser (4) beschickt wird, dass sich eine gleichmäßige Strömungsgeschwindigkeit des Abwassers (4) längs der Anode (11) von nicht mehr als 0,4 m/s oder im Bereich von 0,02 bis 0,08 m/s einstellt, und/oder
- **dass** der erste räumliche Bereich intermittierend so mit dem Abwasser (4) beschickt wird, dass sich eine Strömung mit einer maximalen Strömungsgeschwindigkeit des Abwassers (4) längs der Anode (11) von mehr als 1 m/s oder im Bereich von 2 bis 5 m/s einstellt.

4. Verfahren nach einem der vorhergehenden Ansprüche, **dadurch gekennzeichnet, dass** Gas aus einem oben geschlossenen Kopfraum des ersten räumlichen Bereichs abgeleitet wird.

5. Verfahren nach einem der vorhergehenden Ansprüche, **dadurch gekennzeichnet, dass** die Kathode (14) auf der Membran (13) angeordnet und mit der Membran (13) zu einer Kathoden-Membran-Einheit (12) zusammengefasst wird und dass die Anode (11) mittig zwischen zwei parallelen Teilabschnitten der Kathoden-Membran-Einheit (12) angeordnet wird.

6. Verfahren nach einem der vorhergehenden Ansprüche, **dadurch gekennzeichnet, dass** das Abwasser (4) flussauf des ersten räumlichen Bereichs durch Versäuern und/oder Ansäuern vorbehandelt wird.

7. Verfahren nach einem der vorhergehenden Ansprüche, **dadurch gekennzeichnet, dass** mit jedem DC/DC-Wandler (18)
- die Spannung zwischen der Kathode (14) und der Anode (11) eingestellt wird, bei der eine verfügbare elektrische Leistung maximal ist und/oder
- vorübergehend eine externe Spannung zwischen der Kathode (14) und der Anode (11) angelegt wird und/oder
- ein zwischen der Kathode (14) und der Anode (11) fließender Strom auf einen vorgegebenen Wert geregelt wird.

8. Vorrichtung zur Durchführung des Verfahrens nach einem der vorhergehenden Ansprüche mit
- einer Anodenkammer (8), die einen Zulauf (6) und einen Ablauf (17) für das Abwasser (4) aufweist und in der eine Anode (11) angeordnet ist, und
- einer mit der Anode (11) elektrisch verbundenen Kathode (14),
- wobei durch die Anodenkammer (8) ein sich von dem Zulauf (6) zu dem Ablauf (17) längs der plattenförmigen Anode (11) horizontal erstreckender Kanal (10) verläuft, in den die plattenförmige Anode (11) vertikal eintaucht,
- wobei der Kanal (10) seitlich zumindest abschnittsweise durch eine protonendurchlässige Membran (13) begrenzt ist und die Kathode (14) außerhalb der Anodenkammer (8) auf der Membran (13) angeordnet ist,
- wobei mehrere an oder in der Anodenkammer (8) angeordnete hochsetzende DC/DC-Wandler (18) eingangsseitig an verschiedene Teile der Kathode (14) und/oder der Anode (11) angeschlossen sind und
- wobei die verschiedenen DC/DC-Wandler (18) ausgangsseitig an einen gemeinsamen Zwischenkreis (19) angeschlossen,
**dadurch gekennzeichnet,**
- **dass** der Ablauf am Ende des Kanals (10) als Überlauf (16) für das Abwasser (4) aus der Anodenkammer (8) ausgebildet ist und
- **dass** eine Länge der Anode (11) zwischen dem Zulauf (6) und dem Ablauf (17) mindestens 0,5 m beträgt.

9. Vorrichtung nach Anspruch 8, **dadurch gekennzeichnet, dass** eine Fläche der Kathode (14) und eine Fläche der Membran (13) mindestens um einen Faktor 2 größer sind als eine Fläche der Anode (11).

10. Vorrichtung nach Anspruch 8 oder 9, **dadurch gekennzeichnet,**
- **dass** die Anodenkammer (8) zwei in einem freien Abstand parallel zueinander verlaufende Teilkammern umfasst und/oder
- **dass** die Anode (11) mittig zwischen zwei parallelen Teilabschnitten der Membran (13) angeordnet ist und/oder
- **dass** die Anodenkammer (8) einen nach oben und seitlich umlaufend begrenzten Kopfraum mit einem Gasableitanschluss aufweist.

11. Vorrichtung nach einem der Ansprüche 8 bis 10, **dadurch gekennzeichnet,**
- **dass** ein Abstand der Membran (13) zu der Anode (11) kleiner als 10 cm ist oder in einem Bereich von 0,5 bis 2 cm liegt und/oder
- **dass** die Kathode (14) auf der Membran (13) angeordnet und mit der Membran (13) zu einer Kathoden-Membran-Einheit (12) zusammengefasst ist und/oder
- **dass** die Anode (11) und/oder die Membran (13) und die Kathode (14) auswechselbar an einer formstabilen Kammergrundstruktur (15) gelagert sind.

12. Vorrichtung nach einem der Ansprüche 8 bis 11, **dadurch gekennzeichnet, dass** die Länge der Anode (11) zwischen dem Zulauf (6) und dem Ablauf (17) zwischen 3 m und 10 m beträgt und/oder dass die Fläche der Kathode (14) und die Fläche der Membran (13) um einen Faktor im Bereich von 3 bis 5 größer sind als die Fläche der Anode (11).

13. Vorrichtung nach einem der Ansprüche 8 bis 12, **dadurch gekennzeichnet, dass** die Anode (11) und/oder die Kathode (14) ein in elektrisch leitfähigen Kunststoff (23) eingebettetes Gitter (21), Lochblech oder Gewebe aus einem metallischen Leiter (22) aufweisen, an den der DC/DC-Wandler (18) angeschlossen ist.

14. Vorrichtung nach einem der Ansprüche 8 bis 13, **dadurch gekennzeichnet,**
- **dass** Anschlussleitungen des DC/DC-Wandlers (18) an die Anode (11) und/oder die Kathode (14) nicht länger als 3 m oder 0,5 m sind und/oder
- **dass** kein Strompfad von einem Punkt der Anode (11) und/oder der Kathode (14) zu dem DC/DC-Wandlers (18) länger als 3 m oder um mehr als 1 m oder 0,5 m länger als eine vertikale Erstreckung der jeweiligen Anode (11) oder Kathode (14) ist.

15. Vorrichtung nach einem der Ansprüche 8 bis 14, **dadurch gekennzeichnet, dass** der DC/DC-Wandler (18)
- bidirektional ausgebildet ist und/oder
- einen MPP-Tracker aufweist und/oder
- einen Stromregler aufweist.

## Claims

1. Method of bio-electrically generating electric power from organic ingredients of a wastewater (4) which at least intermittently flows in a flow direction,
- wherein anode (11) is immersed in the wastewater (4) in a first spatial area,
- wherein a cathode (14) which is electrically connected to the anode (11) and arranged in a second spatial area is supplied with oxygen,
- wherein the second spatial area is delimited from the first spatial area by means of a proton-permeable membrane (13),
- wherein a voltage present between the cathode (14) and the anode (11) is increased up to a higher voltage by means of a DC/DC converter located at the anode and the cathode,
- wherein a voltage link (19) is charged with the DC/DC converter (18) and with at least one further DC/DC converter (18) connected in parallel to the voltage link with regard to the DC/DC converter (18),
- wherein each of the DC/DC converters (18) is connected to an anode in the or a further first spatial area and a cathode (14) in the or a further second spatial area, and
- wherein each cathode (14) is supplied with oxygen in that the cathode (14) is immersed in an oxygen containing liquid or an oxygen containing gas in the second spatial area,
**characterised in that** the first spatial area is an anode chamber (8) which is arranged in an aeration basin (2) whose remaining volume defines the second spatial area and which, at least intermittently, is supplied with the wastewater (4) such that the wastewater (4) gets out of the anode chamber (8) over a spillway into the aeration basin (2).

2. Method of claim 1, **characterised in that** the wastewater (4) is aerated after its transfer into the aeration basin (2).

3. Method of any of the preceding claims, **characterised in that** the first spatial area is at least intermittently supplied with the wastewater (4) such that a continuous flow velocity of the wastewater (4) along the anode (11) of not more than 0.4 m/s or in a range from 0.02 to 0.08 m/s is achieved, and/or
- that the first spatial area is intermittently supplied with the wastewater (4) such that a flow with a maximum flow velocity of the wastewater (4) along the anode (11) of more than 1 m/s or in a range from 2 to 5 m/s is achieved.

4. Method of any of the preceding claims, **characterised in that** gas is removed from an upwardly closed head space of the first spatial area.

5. Method of any of the preceding claims, **characterised in that** the cathode (14) is arranged on a membrane (13) and combined with the membrane (13) to form a cathode-membrane-unit, and that the anode (11) is centrally arranged between two parallel partial sections of the cathode-membrane-unit (12).

6. Method of any of the preceding claims, **characterised in that** the wastewater (4) is pretreated by acidification and/or acidulation upstream of the first spatial area.

7. Method of any of the preceding claims, **characterised in that** by means of each of the DC/DC converters (18)
- the voltage between the cathode (14) and the anode (11) is adjusted at which an available electric power is maximal and/or
- an external voltage is temporarily applied between the cathode (14) and the anode (11) and/or
- a current flowing between the cathode (14) and the anode (11) is controlled to meet a predetermined value.

8. Apparatus for executing the method according to any of the preceding claims, comprising
- an anode chamber (8) which has an inlet (6) and an outlet (7) for the wastewater (4) and in which an anode (11) is arranged, and
- a cathode (14) electrically connected to the anode (11),
- wherein a channel (10) runs through the anode chamber (8), the channel (10) horizontally extending along the plate-shaped anode (11) from the inlet (6) to the outlet (17), and the plate-shaped anode (11) vertically immerging in the channel (10),
- wherein the channel (10), at least section-wise, is laterally delimited by a proton-permeable-membrane (13), the cathode (14) being arranged on the membrane (13) outside the anode chamber (8),
- wherein several voltage increasing DC/DC converters (18) which are arranged at or in the anode chamber (8) are connected to different parts of the cathode (14) and/or the anode (11) at their input sides, and
- wherein the different DC/DC converters (18) are connected to a common voltage link (19) at their input sides,
**characterised in**
- **that** the outlet at the end of the channel (10) is made as a spillway (16) for the wastewater (4) out of the anode chamber (8), and
- **that** a length of the anode (11) between the inlet (6) and the outlet (17) is at least 0.5 m.

9. Apparatus of claim 8, **characterised in that** a surface area of the cathode (14) and a surface area of the membrane (13) are larger than a surface area of the anode (11) at least by a factor of 2.

10. Apparatus of claim 8 or 9, **characterised in**
- **that** the anode chamber (8) includes two partial chambers running in parallel to each other at a free distance and/or
- **that** the anode (11) is centrally arranged between two parallel partial areas of the membrane (13) and/or
- **that** the anode chamber (8) has an upwardly and laterally fully delimited head space comprising a gas removal connector.

11. Apparatus of any of the claims 8 to 10, **characterised in**
- **that** a distance of the membrane (13) to the anode (11) is more than 10 cm or in a range between 0.5 and 2 cm and/or
- **that** the cathode (14) is arranged on the membrane (13) and combined with the membrane (13) in a cathode-membrane-unit (12) and/or
- **that** the anode (11) and/or the membrane (13) and the cathode (14) are exchangeably supported at a dimensionally stiff chamber base structure (15).

12. Apparatus of any of the claims 8 to 11, **characterised in that** the length of the anode (11) between the inlet (6) and the outlet (7) is between 3 m and 10 m and/or that the surface area of cathode (14) and the surface area of the membrane (13) are larger than the surface area of the anode (11) by a factor in a range from 3 to 5.

13. Apparatus of any of the claims 8 to 12, **characterised in that** the anode (11) and/or the cathode (14) comprise a grid (21), a perforated plate or a mesh of a metallic conductor (22), which is embedded in an electrically conductive plastic (23) and connected to the DC/DC converter (18).

14. Apparatus of any of the claims 8 to 13, **characterised in**
- **that** connection lines connecting the DC/DC converter (18) to the anode (11) and/or the cathode (14) are not longer than 3 m or 0.5 m and/or
- **that** no current path from any point of the anode (11) and/or the cathode (14) to the DC/DC converter (18) is longer than 3 m or by more than 1 m or 0.5 m longer than a vertical extension of the respective anode (11) or the cathode (14).

15. Apparatus of any of the claims 8 to 14, **characterised in that** the DC/DC converter (18)
- is bidirectional and/or
- comprises a MPP tracker and/or
- comprises a current controller.

## Revendications

1. Procédé de production d'électricité bioélectrique à partir de composants organiques d'eaux usées (4), qui s'écoulent au moins de manière intermittente dans une direction d'écoulement,
- une anode (11) étant immergée dans une première zone spatiale dans les eaux usées (4),
- de l'oxygène étant amené vers une cathode (14), reliée de manière électrique avec l'anode (11), qui est disposée dans une deuxième zone spatiale,
- la deuxième zone spatiale étant séparée de la première zone spatiale par une membrane perméable aux protons (13),
- une tension appliquée entre la cathode (14) et l'anode (11) étant augmentée vers une tension supérieure avec un convertisseur DC/DC (18) disposé près de l'anode (11) et de la cathode (14),
- un circuit intermédiaire (19) étant chargé avec le convertisseur DC/DC (18) et avec au moins un autre convertisseur DC/DC (18) connecté parallèlement au convertisseur DC/DC (18) dans le circuit intermédiaire, chacun des convertisseurs DC/DC (18) étant raccordé à une anode (11) dans la ou une autre première zone spatiale et une cathode (14) étant raccordée dans la ou une autre deuxième zone spatiale et
- de l'oxygène étant amené vers chaque cathode (14), grâce au fait que la cathode (14) est immergée, dans la deuxième zone spatiale, dans un liquide contenant de l'oxygène ou dans un gaz contenant de l'oxygène,
**caractérisé en ce que** la première zone spatiale est une chambre à anode (8) qui est disposée dans un bassin de stimulation (2), dont le volume restant définit la deuxième zone spatiale et qui est alimenté en eaux usées (4) au moins de manière intermittente, de façon à ce que les eaux usées (4) déborde de la chambre à anode (8) par un trop-plein dans le bassin de stimulation (2).

2. Procédé selon la revendication 1, **caractérisé en ce que** les eaux usées (4) sont ventilées après leur débordement dans le bassin de stimulation (2).

3. Procédé selon l'une des revendications précédentes, **caractérisé en ce que**
- la première zone spatiale est alimentée au moins de manière intermittente en eaux usées (4), de façon à obtenir une vitesse découlement uniforme des eaux usées (4) le long de l'anode (11) non supérieure à 0,4 m/s ou de l'ordre de 0,02 à 0,08 m/s et/ou
- la première zone spatiale est alimentée au moins de manière intermittente avec les eaux usées (4) de façon à obtenir un écoulement avec une vitesse d'écoulement maximale des eaux usées (4) le long de l'anode (11) non supérieure à 1 m/s ou de l'ordre de 2 à 5 m/s.

4. Procédé selon l'une des revendications précédentes, **caractérisé en ce que** le gaz est dévié hors d'un espace supérieur fermé en haut de la première zone spatiale.

5. Procédé selon l'une des revendications précédentes, **caractérisé en ce que** la cathode (14) est disposée sur la membrane (13) et est regroupée avec la membrane (13) en une unité cathode-membrane (12) et **en ce que** l'anode (11) est disposée au centre entre deux parties parallèles de l'unité cathode-membrane (12).

6. Procédé selon l'une des revendications précédentes, **caractérisé en ce que** les eaux usées (4) sont pré-traitées en amont de la première zone spatiale par acidification.

7. Procédé selon l'une des revendications précédentes, **caractérisé en ce que**, avec chaque convertisseur DC/DC (18)
- la tension entre la cathode (14) et l'anode (11) à laquelle une puissance électrique disponible est maximale est réglée et/ou
- une tension extérieure est appliquée provisoirement entre la cathode (14) et l'anode (11) et/ou
- un courant s'écoulant entre la cathode (14) et l'anode (11) est régulée à une valeur prédéterminée.

8. Dispositif d'exécution du procédé selon l'une des revendications précédentes, avec
- une chambre d'anode (8), qui comprend une admission (6) et une évacuation (17) pour les eaux usées (4) et dans laquelle une anode (11) est disposée et
- une cathode (14) reliée électriquement avec l'anode (11),
- un canal (10) s'étendant horizontalement à travers la chambre d'anode (8) de l'admission (6) à l'évacuation (17) le long de l'anode en forme de plaque (11), dans lequel l'anode en forme de plaque (11) est immergée verticalement,
- le canal (10) étant délimité latéralement, au moins à certains endroits, par une membrane perméable aux protons (13) et la cathode (14) étant disposée à l'extérieur de la chambre d'anode (8) sur la membrane (13).
- plusieurs convertisseurs DC/DC (18) d'augmentation, disposés sur ou dans la chambre d'anode (8), étant raccordés côté entrée à différentes parties de la cathode (14) et/ou de l'anode (11) et
- les différents convertisseurs DC/DC (18) étant raccordés côté sortie à un circuit intermédiaire (19) commun,
**caractérisé en ce que**
- l'évacuation est réalisée à l'extrémité du canal (10) sous la forme d'un trop-plein (16) pour les eaux usées (4) hors de la chambre d'anode (8) et
- une longueur de l'anode (11) entre l'admission (6) et l'évacuation (17) est d'au moins 0,5 m.

9. Dispositif selon la revendication 8, **caractérisé en ce qu'**une surface de la cathode (14) et une surface de la membrane (13) sont supérieures, au moins d'un facteur 2, à une surface de l'anode (11).

10. Dispositif la revendication 8 ou 9, **caractérisé en ce que**
- la chambre d'anode (8) comprend deux chambres partielles s'étendant parallèlement entre elles à une distance libre et/ou
- l'anode (11) étant disposée de manière centrale entre deux parties parallèles de la membrane (13) et/ou
- la chambre d'anode (8) comprend un espace supérieur, limité vers le haut et latéralement de manière circulaire, avec un raccord pour conduite de gaz.

11. Dispositif selon l'une des revendications 8 à 10, **caractérisé en ce que**
- une distance entre la membrane (13) et l'anode (11) est inférieure à 10 cm ou est de l'ordre de 0,5 à 2 cm et/ou
- la cathode (14) est disposée sur la membrane (13) et est regroupée avec la membrane (13) en une unité cathode-membrane (12) et/ou
- l'anode (11) et/ou la membrane (13) et la cathode (14) sont logées de manière interchangeable au niveau d'une structure de base de chambre rigide (15).

12. Dispositif selon l'une des revendications 8 à 11, **caractérisé en ce que** la longueur de l'anode (11) entre l'admission (6) et l'évacuation (17) est entre 3 m et 10 m et/ou **en ce que** la surface de la cathode (14) et la surface de la membrane (13) sont supérieures, d'un facteur de l'ordre de 3 à 5, à la surface de l'anode (11).

13. Dispositif selon l'une des revendications 8 à 12, **caractérisé en ce que** l'anode (11) et/ou la cathode (14) comprennent une grille (21), une tôle perforée ou un treillis, constitué d'un conducteur métallique (22), intégré dans une matière plastique électro-conductrice (23), auquel est raccordé le convertisseur DC/DC (18).

14. Dispositif selon l'une des revendications 8 à 13, **caractérisé en ce que**
- les conduites de raccordement du convertisseur DC/DC (18) à l'anode (11) et/ou à la cathode (14) ne sont pas plus longues que 3 m ou 0,5 m et/ou
- aucun trajet de courant d'un point de l'anode (11) et/ou de la cathode (14) au convertisseurs DC/DC (18) n'est plus long que 3 m ou n'est supérieur de plus de 1 m ou 0,5 m à une extension verticale de l'anode (11) ou de la cathode (14) correspondante.

15. Dispositif selon l'une des revendications 8 à 14, **caractérisé en ce que** le convertisseur DC/DC (18)
- est conçu de manière bidirectionnelle et/ou
- comprend un tracker MPP et/ou
- comprend un régulateur de courant.
